(19) Europäisches Patentamt
European Patent Office
Office européen des brevets

(11) Veröffentlichungsnummer: **0 563 410 B1**

(12) **EUROPÄISCHE PATENTSCHRIFT**

(45) Veröffentlichungstag der Patentschrift: **24.05.95**

(51) Int. Cl.6: **F16H 55/24**, E05F 15/16

(21) Anmeldenummer: **92105364.1**

(22) Anmeldetag: **27.03.92**

(54) **Selbstnachstellende Axialspieleinstellung für eine Rotorwelle.**

(43) Veröffentlichungstag der Anmeldung:
**06.10.93 Patentblatt 93/40**

(45) Bekanntmachung des Hinweises auf die Patenterteilung:
**24.05.95 Patentblatt 95/21**

(84) Benannte Vertragsstaaten:
**DE FR GB IT**

(56) Entgegenhaltungen:
**EP-A- 0 023 024
DE-A- 2 312 395
DE-A- 3 126 670
GB-A- 2 106 609**

(73) Patentinhaber: **SIEMENS AKTIENGESELL-SCHAFT
Wittelsbacherplatz 2
D-80333 München (DE)**

(72) Erfinder: **Assel, Gunnar
Welbhausen 63
D-8704 Uffenheim (DE)**
Erfinder: **Luckas, Thomas, Dipl.-Ing.
Frühlingstrasse 2
D-8702 Kürnach (DE)**

EP 0 563 410 B1

**Beschreibung**

Die Erfindung bezieht sich auf eine selbstnachstellende Axialspieleinstellung für eine Rotorwelle gemäß Patentanspruch 1.

Durch die US-A-3 848 477 ist eine Axialspieleinstellung für eine Rotorwelle mit einem Keilschiebersystem mit aufgrund des Zusammenspiels einer Axialkraft der Rotorwelle einerseits und einer definierten Keilschiebekraft eines Stellkeils andererseits aufeinandergleitenden Keilflächen bekannt, wobei die aufeinandergleitenden Keilflächen eben ausgebildet sind und die den Stellkeil nachstellende Schraubenfeder derart stark ausgelegt sein muß, daß sie sämtlichen im Betrieb auftretenden Axialkräften der Rotorwelle widerstehen kann; durch den derart bedingten während der gesamten Betriebszeit notwendigen starken Andruck der Lauffläche der Rotorwelle an die Gegenfläche des Stellkeils ergibt sich ein unerwünschter starker Verschleiß und somit ein zusätzlicher Anlaß für ein unerwünschtes sich betriebsmäßig vergrößerndes und nachzustellendes Axialspiel.

Eine wesentliche Minderung des zuvor beschriebenen, im bekannten Fall bedingten, jedoch unerwünschten Verschleißes kann bei Gewährleistung eines jeweils definierten maximalen Axialspiels mit geringen Mitteln auch über lange Betriebsstandzeiten durch die Lehre des Patentanspruchs 1 vorliegenden Erfindung erreicht werden; in zweckmäßiger Weise kann dadurch ein solcher Steigungswinkel zwischen den Wellenbergen und den Wellentälern bzw. lediglich eine solche Stärke einer durch ein Federelement auf den Stellkeil wirkenden Keilverschiebekraft vorgesehen werden, daß ein Verschieben des Stellkeils im Sinne einer Axialspielnachstellung nur durch das Federelement gewährleistet und ein Verschieben in Gegenrichtung aus einer Wellentallage des Stellkeils heraus und somit über das definierte Maß eines zulässigen Axialspiels heraus durch die Keilschiebekraft des Federelementes und die zusätzliche Reibungskraft der aufeinandergleitenden gegenseitigen Keilflächen der Wellentäler bzw. Wellenberge gehindert ist. Der Stellkeil wird in diesem Fall lediglich mit einer Keilschiebekraft gegen die Lauffläche der Rotorwelle angedrückt, die notwendig ist um bei sich vergrößerndem Axialspiel den Stellkeil von einer ersten Wellentallage über den nachfolgenden Wellenberg in die nächste Wellentallage nachzustellen, während eine Rückstellung des Stellkeiles in Gegenrichtung dadurch verhindert ist, daß die an sich geringe Keilschiebekraft durch das Federelement durch die Reibungskraft der entsprechend steilen Steigungswinkel im Verlauf der Keilflächen zwischen den Wellenbergen und Wellentälern merklich vergrößert ist.

Bei der vorgenannten Auslegung kann die gesamte, eine unerwünschte Rückstellung des Stellkeils verhindernde Gegenkraft durch das Federelement einerseits und die Reibungskraft andererseits in vorteilhafter Weise so festgelegt werden, daß bei der Montage des gesamten Antriebes durch einen die maximale betriebsmäßige Axialkraft übersteigenden axialen Montagedruck auf die Rotorwelle ein axiales vorübergehendes Nachgeben der Verstellbauteile möglich und somit ein unerwünschtes Verklemmen der gegenseitigen Bauteile bei der Montage verhinderbar ist.

Soll auf eine derartige Montagefreundlichkeit verzichtet bzw. sollen sehr große auf die Rotorwelle einwirkende Rückstellaxialkräfte durch den Stellkeil kompensierbar sein, so ist nach einer Ausgestaltung der Erfindung ein solcher kleinster Tangentenwinkel zwischen den aufeinandergleitenden Flächen vorgesehen, daß sich eine Selbsthemmung und dadurch ein unzulässiges Rückstellen des Keilschiebersystems im Sinne eines zu großen Axialspiels verhinderbar ist.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:

FIG 1  in einem axialen Längsteilschnitt einen Kraftfahrzeug-Fensterheberantrieb mit einem Keilschiebersystem vor dem rechten Rotorwellenende,

FIG 2  in einem vergrößerten Detailausschnitt aus FIG 1 die Formgebung der aufeinandergleitenden Flächen des Keilschiebersystems,

FIG 3 bis 5  drei verschiedene Betriebsstellungen des Keilschiebersystems gemäß FIG 2.

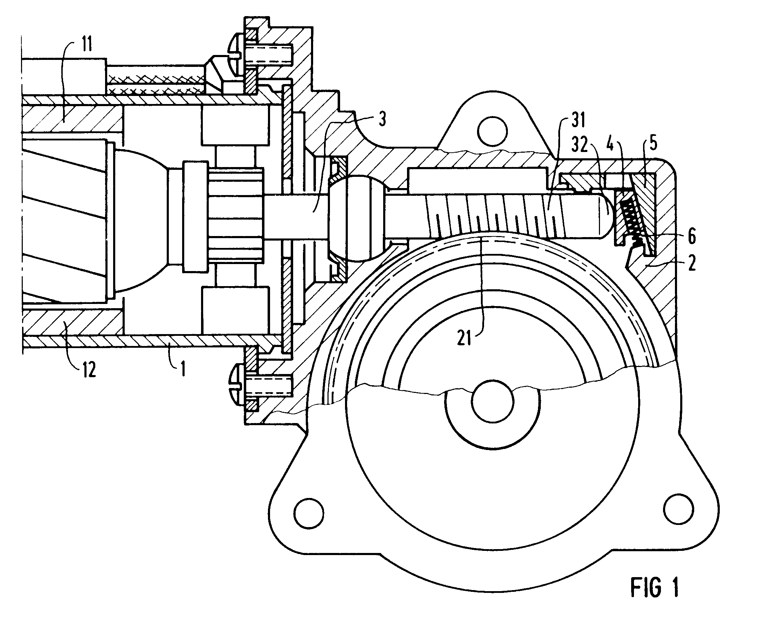

FIG 1 zeigt in einem axialen Längsteilschnitt einen Kraftfahrzeug-Fensterheberantrieb mit einem an ein Motorgehäuse 1 eines Kommutatormotors angeflanschten Getriebegehäuse 2, in dem ein, z.B. mit einem Seilheber abtriebsseitig verbundenes, Schneckenrad 21 von einer Schneckenwelle 31 auf der bis in das Getriebegehäuse 2 verlängerten Rotorwelle 3 angetrieben wird. Durch die Toleranzkette der zu dem Getriebemotor zusammengebauten Einzelbauteile und durch einen gewissen betriebsbedingten Verschleiß der Axiallagerelemente kann sich ein solch hohes Axialspiel ergeben, daß sich unzulässige Geräusche durch Anschlag des Rotorwellenendes an das Getriebegehäuse 2 ergeben, da die Rotorwelle 3 durch den Zahneingriff des Schneckenantriebes je nach Drehrichtung der Rotwelle 3 einer Axialkraft $F_{ax}$ in der einen oder anderen Achsrichtung ausgesetzt ist.

Zur Einhaltung eines lediglich vordefinierten maximalen Axialspiels a ist erfindungsgemäß ein Keilschiebersystem mit einem an einen Anlaufpilz 32 der Rotorwelle 3 anlaufenden Stellkeil 4 und einem Grundkörper 5 sowie eine den Stellkeil 4 mit einer Keilschiebekraft $F_f$ nachstellende, am Getriebegehäuse 2 gegenabgestützte Schraubenfeder 6 vorgesehen, wobei die gegenseitig aufeinandergleitenden Keilflächen 41 bzw. 51 des Stellkeils 4 bzw. des Grundkörpers 5 miteinander korrespondierenden Wellenbergen 411 bzw. 511 und Wellentälern 412 bzw. 512 derart versehen sind, daß das maximal zulässige Axialspiel a durch die gegenseitige Verschiebung b der aufeinandergleitenden Keilflächen 41;51 zwischen zumindest zwei aufeinanderfolgenden Wellentallagen des Stellkeils 4 bestimmt ist.

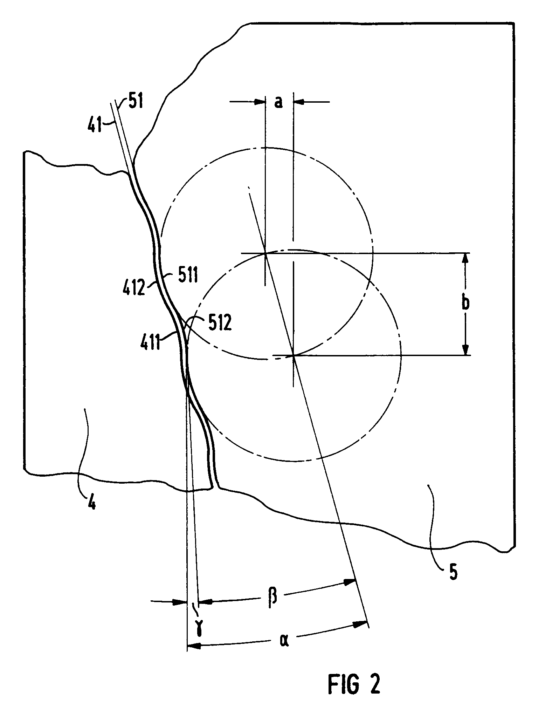

FIG 2 zeigt in vergrößertem Deteilausschnitt aus FIG 1 eine gegenseitige Ausgangsstellung von Stellkeil 4 einerseits und Grundkörper 5 andererseits. Das maximal zulässige Axialspiel ist mit "a" angenommen, dem entspricht der gegenseitige Versatz "b" von Stellkeil 4 und Grundkörper 5 gegenseitiger Verstellung um ein Wellental bzw. Wellenberg. Mit $\alpha$ ist der Bewegungswinkel der gesamten Keilfläche des Keilschiebersystems relativ zur Anlauffläche des Stellkeils 4 für den Anlaufpilz 32 gekennzeichnet, die senkrecht zur Achse des Getriebemotors verläuft; der Tangentenwinkel $\gamma$ beschreibt den jeweiligen Richtungsverlauf eines Wellentals bzw. Wellenbergs im Anlagepunkt der Tangente relativ wiederum zur Anlauffläche des Anlaufpilzes 32; bei Selbsthemmung ist der Kurvenverlauf derart auszulegen, daß bei kleinstem Tangentenwinkel $\gamma$ die gewünschte Selbsthemmung gewahrleistet wird. Der Winkel $\beta$ ergibt sich als Differenz der Winkel $\alpha$ und $\gamma$ ($\beta = \alpha - \gamma$).

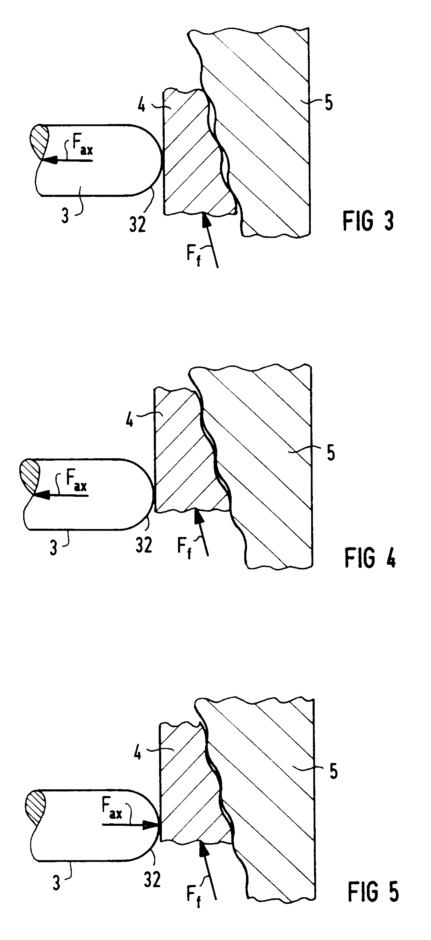

Die Einhaltung des maximalen Axialspiels aufgrund des erfindungsgemäßen Keilschiebersystems wird im folgenden von drei Betriebsstellungen gemäß FIG 3-5 erläutert.

Bei sich, z.B. wegen eines betriebsmäßigen Verschleißes der Axiallagerelemente, vergrößerndem Axialspiel bewegt sich der Anlaufpilz 32 der Rotorwelle 3 ausgehend von der Position gemäß FIG 2 unter der Wirkung einer Axialkraft $F_{ax}$ gemäß FIG 3 nach links; die Keilschiebekraft $F_f$ der Schraubenfeder 6 ist lediglich derart stark ausgelegt, daß der Stellkeil 4 in den sich vergrößernden Spalt zwischen der Keilfläche des Grundkörpers 5 und des Anlaufpilzes 32 der Rotorwelle 3 nachgeschoben wrden kann, dabei jedoch nur mit derart leichtem Andruck axial gegen den Anlaufpilz 32 anliegt, daß bei einer Bewegung des Anlaufpilzes nach rechts aufgrund z.B. eines Drehrichtungswechsels der Rotorwelle 3 sich der Stellkeil 4 wieder in die in FIG 2 dargestellte Ausgangslage zurückbewegen kann. Ein weiteres Zurückdrücken ist dadurch verhindert, daß die sich zu der Andruckkraft der Schraubenfeder 6 dann addierende Reibungskraft zwischen der Berührungsfläche des Stellkeils 4 und der Berührungsfläche des Grundkörpers 5 größer sind, als die durch die Rotorwelle 3 auf den Stellkörper 4 wirkende Verstellkraft; es tritt somit Selbsthemmung ein.

Falls jedoch gemäß FIG 4 bei nach links gerichteter Axialkraft $F_{ax}$ das Axialspiel größer als der zulässige Wert $a$ wird, kann der Stellkeil 4 im jetzt entlasteten Fall durch die Keilschiebekraft $F_f$ um eine Wellental-Wellenbergstufe nachgeführt werden.

Erfolgt nun eine Drehrichtungsumkehr der Rotorwelle 3 und somit eine Belastung des Keilschiebersystems durch eine Axialkraft $F_{ax}$ gemäß Wirkungsrichtung in FIG 5, wirkt das erfindungsgemäße Keilschiebesystem - wie zuvor beschrieben - selbsthemmend, derart daß das Keilschiebersystem nicht wieder um eine Stufe zurückgestellt werden kann und somit das Axialspiel auf das hochzulässige Maß "a" beschränkt ist.

**Patentansprüche**

1. Selbstnachstellende Axialspieleinstellung für eine Rotorwelle (3), insbesondere eines Kraftfahrzeug-Fensterhebers, mittels eines Keilschiebersystems (4;5) mit aufgrund des Zusammenspiels einer Axialkraft ($F_{ax}$) der Rotorwelle (3) einerseits und einer definierten Keilschiebekraft ($F_f$) eines Stellkeils (4) andererseits aufeinandergleitenden Keilflächen (41;51), die in Schieberichtung mit einander korrespondierenden Wellbergen (411;511) und Wellentälern (412;512) derart versehen sind, daß das maximal zulässige Axialspiel (a) durch die gegenseitige Verschiebung (b) der Keilflächen (41;51) zwischen zumindest zwei aufeinanderfolgenden Wellentallagen des Stellkeils (4) bestimmt ist.

2. Selbstnachstellende Axialspieleinstellung nach Anspruch 1 mit einem solchen Steigungswinkel zwischen den Wellbergen (411;511) und den Wellentälern (412;512) bzw. einer solchen Stärke einer durch ein Federelement (Schraubenfeder 6) auf den Stellkeil (4) wirkenden Keilschiebekraft ($F_f$), daß ein Verschieben des Stellkeils (4) im Sinne einer Axialspielnachstellung nur durch die Schraubenfeder (6) gewährleistet und ein Verschieben in Gegenrichtung aus einer Wellentallage des Stellkeils (4) heraus durch die Keilschiebekraft ($F_f$) der Schraubenfeder (6) und die Reibungskraft der gegenseitigen Keilflächen (41;51) gehindert ist.

3. Selbstnachstellende Axialspieleinstellung nach Anspruch 2 mit einem Tangentenwinkel zwischen den aufeinandergleitenden Flächen im Sinne einer Selbsthemmung des Keilschiebersystems (4;5) in Gegenrichtung aus einer Wellentallage des Stellkeils (4) heraus.

4. Stelbstnachstellende Axialspieleinstellung nach einem der Ansprüche 1-3 mit einer Schraubenfeder (6) als Keilschiebekraft für den Stellkeil (4).

5. Selbstnachstellende Axialspieleinstellung nach einem der Ansprüche 1-4 mit im Sinne von wechselweisen Wellenbergen (411;511) und Wellentälern (412;512) gewellten Keilflächen.

6. Selbstnachstellende Axialspieleinstellung nach einem der Ansprüche 1-4 mit im Sinne von wechselweisen Wellenbergen (411;511) und Wellentälern (412;512) gezackten Keilflächen.

7. Selbstnachstellende Axialspieleinstellung nach einem der Ansprüche 1-4 mit im Sinne von wechselweisen Wellenbergen (411;511) und Wellentälern (412;512) genoppten Keilflächen.

**Claims**

1. Self-adjusting axial play adjustment for a rotor shaft (3), more particularly of a motor vehicle window lift, by means of a wedge slider system (4;5) comprising wedge surfaces (41;51) which slide over one another owing to the interplay of an axial force ($F_{ax}$) of the rotor shaft (3) on the one hand, and a defined wedge sliding force ($F_f$) of an adjusting wedge (4) on the other hand, which wedge surfaces are provided in the sliding direction with mutually corresponding wave crests (411;511) and wave troughs (412;512) in such a way that the maximum permissible axial play (a) is determined by the reciprocal displacement (b) of the wedge surfaces (41;51) between at least two successive wave trough positions of the adjusting wedge (4).

2. Self-adjusting axial play adjustment according to claim 1, comprising an angle of inclination between the wave crests (411;511) and the wave troughs (412;512) or a strength of a wedge sliding force ($F_f$) acting on the adjusting wedge (4) by a spring element (helical spring 6) such that displacement of the adjusting wedge (4) for the purpose of axial play adjustment is ensured only by means of the helical spring (6) and displacement in the opposite direction out of a wave trough position of the adjusting wedge (4) is prevented by the wedge sliding force ($F_f$) of the helical spring (6) and the frictional force of the reciprocal wedge surfaces (41;51).

3. Self-adjusting axial play adjustment according to claim 2, comprising a tangent angle between the surfaces sliding over one another to produce self-locking of the wedge slider system (4;5) in the opposite direction out of a wave trough position of the adjusting wedge (4).

4. Self-adjusting axial play adjustment according to one of claims 1-3, comprising a helical spring (6) as the wedge sliding force for the adjusting wedge (4).

5. Self-adjusting axial play adjustment according to one of claims 1-4, comprising wedge surfaces which are wave-shaped to produce alternate wave crests (411;511) and wave troughs (412;512).

6. Self-adjusting axial play adjustment according to one of claims 1-4, comprising indented wedge surfaces to produce alternate wave crests (411;511) and wave troughs (412;512).

7. Self-adjusting axial play adjustment according to one of claims 1-4, comprising burled wedge surfaces to produce alternate wave crests (411;511) and wave troughs (412:512).

**Revendications**

1. Système de rattrapage automatique du jeu axial pour l'arbre (3) d'un rotor, notamment d'un lève-glace de véhicule automobile, comportant un système de poussoirs cruciformes (4;5) comportant des surfaces obliques (41;51), qui glissent l'une sur l'autre en raison de la coopération, d'une part, d'une force axiale ($L_{ax}$) de l'arbre du rotor (3) et, d'autre part, d'une force définie de poussée ($F_t$) d'un coin de réglage (4), et qui sont pourvues, dans la direction de poussée, de sommets (411;511) et de creux (412;512) d'ondulations, qui se correspondent entre eux, de telle sorte que le jeu axial maximum admissible (a) est déterminé par le déplacement réciproque (b) des surfaces obliques (41;51) entre au moins deux positions successives de creux d'ondulation du poussoir cruciforme de réglage (4).

2. Système de rattrapage automatique du jeu axial suivant la revendication 1, dans lequel l'angle d'inclinaison entre les sommets (411;511) et les creux (412;512) des ondulations ou l'intensité d'une force de poussée ($F_f$), qui est appliquée au poussoir cruciforme de réglage (4) par un élément de ressort (ressort hélicoïdal 6), est tel qu'un déplacement du poussoir cruciforme de réglage (4) dans le sens d'un rattrapage du jeu axial est assuré uniquement par le ressort hélicoïdal (6) et qu'un déplacement en sens opposé à partir de la position du creux d'ondulation du poussoir cruciforme de réglage (4) est empêché par la force de poussée ($F_f$) appliquée à celui-ci par le ressort hélicoïdal (6) et par la force de frottement des surfaces oblique opposées (41;51).

3. Système de rattrapage automatique du jeu axial suivant la revendication 2, dans lequel il existe un angle des tangentes entre les surfaces qui glissent l'une sur l'autre, dans le sens d'un autoblocage du système de poussoir cruciforme (4;5) en sens opposé à partir d'une position d'un creux d'ondulation du poussoir cruciforme de réglage (4).

4. Système de rattrapage automatique du jeu axial suivant l'une des revendications 1-3, comportant un ressort hélicoïdal (6) en tant que système produisant la force de poussée pour le poussoir cruciforme de réglage (4).

5. Système de rattrapage automatique du jeu axial suivant l'une des revendications 1-4, comportant des surfaces obliques qui sont ondulées en raison de la présence de sommets (411;511) et de creux (412;512) d'ondulations alternées.

6. Système de rattrapage automatique du jeu axial suivant l'une des revendications 1-4, comportant des surfaces obliques qui sont dentelées conformément à la présence de sommets (411;511) et de creux (412,512) alternés d'ondulations.

7. Système de rattrapage automatique du jeu axial suivant l'une des revendications 1-4, comportant des surfaces obliques qui sont bosselées en raison de la présence de sommets (411;511) et de creux (412;512) alternés d'ondulations.

FIG 1

FIG 2

FIG 3

FIG 4

FIG 5